# EUROPÄISCHE PATENTSCHRIFT

(11) **EP 3 053 493 B1**
(45) Veröffentlichungstag und Bekanntmachung des Hinweises auf die Patenterteilung: **29.05.2019**
(21) Anmeldenummer: 15188211.5
(22) Anmeldetag: 02.10.2015
(51) Int. Cl.: A47J 31/44

(54) **GETRÄNKEZUBEREITUNGSVORRICHTUNG**
DRINK PREPARATION DEVICE
DISPOSITIF DE PRÉPARATION DE BOISSONS

(30) Priorität: 06.02.2015 DE 202015100586 U
(43) Veröffentlichungstag der Anmeldung: 10.08.2016
(73) Patentinhaber: Eugster/Frismag AG, 8580 Amriswil (CH)
(72) Erfinder: WÄGER, Simon, 8580 Amriswil (CH); RIESSBECK, Wolfgang, 8597 Landschlacht (CH)
(74) Vertreter: Patentanwälte Behrmann Wagner PartG mbB

(56) Entgegenhaltungen:
- EP-A2- 1 516 997
- DE-A1- 19 652 577
- DE-U1- 20 017 859
- DE-U1-202005 011 476
- DE-U1-202005 012 810
- DE-U1-202009 006 129
- US-A1- 2003 201 279

## Beschreibung

Die Erfindung betrifft eine Getränkezubereitungsvorrichtung gemäß dem Oberbegriff des Anspruchs 1, insbesondere eine Kaffeemaschine, wie einen Kaffeevollautomaten oder eine Portionseinheitenmaschine, insbesondere eine Kapselmaschine, mit einem Gehäuse und mit einer vor einer Gehäusefrontwand angeordneten, entlang einer Hochachse höhenverstellbaren Getränkeauslaufeinheit, wobei in der Gehäusefrontwand ein sich entlang der Hochachse erstreckender Durchbruch angeordnet ist, durch welchen sich mindestens eine Getränkezulaufleitung erstreckt, mit welcher die Getränkeauslaufeinheit (genauer mindestens ein Auslauf der Getränkeauslaufeinheit) mit Getränkezubereitungsmitteln, insbesondere einer Brüheinheit für Kaffee, fluidleitend verbunden ist und wobei mit der Getränkeauslaufeinheit Abdeckmittel (mittelbar oder unmittelbar) derart verbunden sind, dass diese durch manuelles oder automatisches Verstellen der Getränkeauslaufeinheit zusammen mit dieser verschiebbar sind und die einen von der Getränkeauslaufeinheit nicht abgedeckten Abschnitt des Durchbruchs abdecken und wobei den Abdeckmitteln Umlenkmittel zugeordnet sind, mit denen die Abdeckmittel relativ zur Hochachse im Inneren des Gehäuses umlenkbar sind.

Eine Getränkezubereitungsvorrichtung, bei welcher ein in der Gehäusefrontwand angeordneter Durchbruch mittels eines einteiligen Abdeckbandes abgedeckt ist, ist in der EP 2 245 970 A1 sowie in der prioritätsbegründenden Anmeldung DE 20 2009 006 129 U1 hierzu beschrieben. Bei der bekannten Getränkezubreitungsvorrichtung ist die Getränkeauslaufeinheit höhenverstellbar, damit Tassen oder Gläser unterschiedlicher Höhe verwendet werden können, an deren Öffnung mindestens ein Auslauf der Getränkeauslaufeinheit heranverstellt werden kann. Mittels des Bandes, welches durch Höhenverstellen der Getränkeauslaufeinheit mit dieser mit verstellt wird, wird sichergestellt, dass ein nicht von der Getränkeauslaufeinheit abgedeckter Abschnitt des Durchbruchs dauerhaft abgedeckt bzw. von hinten her verschlossen ist. Die bekannte Getränkezubereitungsvorrichtung hat sich bewährt - als nachteilig wird jedoch empfunden, dass für unterschiedliche Getränkezubereitungsmaschinen, die sich durch voneinander unterschiedlich dimensionierte Durchbrüche bzw. einem voneinander unterschiedlichen Höhenverstellweg der Getränkeauslaufeinheit unterscheiden, individuell gestaltete, d.h. maschinentypspezifizierte Abdeckbänder eingesetzt werden müssen, was es erforderlich macht, für jeden (unterschiedlichen) Getränkezubereitungsvorrichtungstyp ein neues Werkzeug zur Herstellung des jeweiligen (einteiligen) Abdeckbandes einzusetzen. Dies ist mit hohen Kosten verbunden. Darüber hinaus wird als nachteilig empfunden, dass die Führung für das Abdeckband vergleichsweise exakt gearbeitet sein muss, um ein Aufwellen des Bandes bei seiner Verstellbewegung aufgrund eines Verkantens zu vermeiden - insgesamt ist das Gleiten des Abdeckbandes durch Aufbringen von Druckkräften im Hinblick auf eine ruckelfreie Verstellung ohne Verkanten problematisch.

Aus der US 2003/0201279 A1 ist ein Getränkeautomat bekannt, bei dem eine Ausgabeöffnung über translatorisch in einer Führungsschiene verstellbare Lamellenelemente verschließbar ist.

Die DE 20 2005 011 476 U1 beschreibt einen Kaffeeautomat mit höhenverstellbarer und arretierbarer Auslaufeinheit.

Die DE 200 17 859 U1 beschreibt ebenfalls eine Kaffeemaschine mit höhenverstellbarem Auslauf.

Die DE 196 52 577 A1 und EP 1 516 997 A2 beschreiben fachfremden Stand der Technik zum Verschließen von Wand- bzw. Möbelöffnungen.

Die DE 20 2005 012 810 U1 ist ebenfalls eine fachfremde Druckschrift und beschreibt eine Verschlussanordnung für eine Öffnung eines Schrankes.

Zum weiteren Stand der Technik werden die DE 20 2005 011 476, die DE 202 20 056 U1 und die DE 200 17 859 U1 genannt.

Ausgehend von dem vorgenannten Stand der Technik liegt der Erfindung die Aufgabe zugrunde, eine Getränkezubereitungsvorrichtung anzugeben, bei welcher ein Abschnitt eines Durchbruchs in der Gehäusefrontwand zuverlässig abgedeckt ist und bevorzugt eine sanfte bzw. ruckelfreie Verstellbewegung der zum Einsatz kommenden Abdeckmittel auch durch Aufbringen einer Druckkraft gewährleistet ist. Ganz besonders bevorzugt soll sich die Getränkezubereitungsvorrichtung dadurch auszeichnen, dass die Abdeckmittel so ausgestaltet sind, dass diese auf einfache Weise an unterschiedliche Getränkezubereitungsvorrichtungen, die sich durch unterschiedlich dimensionierte, abzudeckende Durchbrüche auszeichnen, adaptiert werden können.

Diese Aufgabe wird mit den Merkmalen des Anspruchs 1 gelöst, d.h. bei einer gattungsgemäßen Getränkezubereitungsvorrichtung dadurch, dass die Abdeckmittel mindestens eine mehrgliedrige Lamellenkette umfassen, die eine Mehrzahl von (separaten) gelenkig miteinander verbundenen, bevorzugt identischen, Lamellengliedern (Kettenglieder) umfassen.

Vorteilhafte Weiterbildungen der Erfindung sind in den Unteransprüchen angegeben und in dem Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, die Abdeckmittel, mit denen mindestens ein Abschnitt des Durchbruchs, vor, hinter oder in dem Durchbruch abdeckbar ist als mehrgliedrige Lamellenkette auszubilden, die eine Mehrzahl von gelenkig miteinander verbundenen, bevorzugt identischen Lamellengliedern umfasst. Anders ausgedrückt umfassen die Abdeckmittel erfindungsgemäß eine Gliederkette aus einer Vielzahl von, insbesondere lösbar, gelenkig miteinander verbundenen Lamellengliedern, die eine Umlenkung der so erhaltenen Lamellenkette ins Innere des Gehäuses ermöglicht. Die erfindungsgemäße Lamellenkette weist gegenüber bisher bekannten einteiligen, insbesondere bandförmigen Lösungen eine Vielzahl von Vorteilen auf. So ist eine Lamellenkette im Hinblick auf die Übertragung von Druckkräften zum Verstellen der Lamellenkette aufgrund der im Vergleich zu einem Band massiveren Lamellen robuster, so dass auch mit vergleichsweise einfacheren bzw. ungenaueren Führungen ein Aufwellen bzw. Verkanten vermieden werden kann.

Ein entscheidender Vorteil des Einsatzes einer Lamellenkette im Vergleich mit einteiligen Lösungen, wie einem Abdeckband ist darin zu sehen, dass die Lamellenkette, nahezu beliebig, längenveränderbar ist, da die Länge durch die Anzahl der gelenkig miteinander verbundenen Lamellenglieder bestimmbar ist. Insbesondere dann, wenn mehrere, insbesondere die Mehrzahl der Lamellenglieder, identisch ausgebildet ist, beispielsweise durch die Ausbildung der Lamellenglieder als Kunststoffspritzgussteil, ist eine Längenanpassung der Abdeckmittel bzw. der Lamellenkette an unterschiedliche Getränkezubereitungsvorrichtungen möglich, ohne hierfür unterschiedliche Werkzeuge vorsehen zu müssen. Dabei sind jeweils zwei benachbarte der Lamellenglieder in der Art eines Scharniers gelenkig, d.h. relativ verschwenkbar miteinander verbunden.

Eine Anpassung der Abdeckmittel an unterschiedlich gestaltete Durchbrüche ist nicht nur durch eine Längenveränderung möglich - auch ist es möglich, insbesondere durch das Anordnen zweier paralleler Lamellenketten, einen breiteren Durchbruch abzudecken, ohne hierfür das Design der Lammelenglieder verändern zu müssen.

Die Anbindung bzw. Wirkverbindung der Lamellenkette (Lamellengliederkette) mit der Getränkeauslaufeinheit kann auf vielfältige Art und Weise realisiert werden, insbesondere unmittelbar, indem ein unmittelbar zur Getränkeauslaufeinheit benachbartes bzw. an diese angrenzendes Lamellenglied, insbesondere durch Verrasten, noch weiter bevorzugt gelenkig mit der Getränkeauslaufeinheit verbunden wird - alternativ ist auch eine mittelbare Fixierung über ein Adapterteil möglich.

Auch im Hinblick auf die Anordnung des von dem von der Lamellenkette abzudeckenden Abschnittes des Durchbruchs gibt es unterschiedliche Möglichkeiten - insbesondere bevorzugt ist es, wenn sich ein abzudeckender Durchbruch entlang der Hochachse unterhalb der Getränkeauslaufeinheit befindet. Alternativ oder bevorzugt zusätzlich ist es denkbar, dass (auch) ein oberhalb der Getränkeauslaufeinheit vorgesehener Abschnitt des Durchbruchs mittels einer Lamellenkette abgedeckt ist. Für den Fall des Vorsehens sowohl eines abzudeckendes Ausbruchs oberhalb als auch unterhalb der Getränkeauslaufeinheit ist es grundsätzlich möglich, hierfür eine einzige Lamellenkette vorzusehen, die sich dann bevorzugt hinter der Getränkeauslaufeinheit entlang der Hochachse erstreckt - bevorzugt ist für den Fall von zwei abzudeckenden Durchbrüchen auch eine alternative Ausführungsform möglich, wonach jedem der vorgenannten Durchbrüche eine eigene, jeweils mittelbar oder unmittelbar mit der Getränkezulaufeinheit verbundene und insoweit zusammen mit dieser verstellbare Lamellenkette zugeordnet ist.

Bei der erfindungsgemäßen Ausführungsform der Getränkezubereitungsvorrichtung, ist die gelenkige Verbindung von jeweils zwei unmittelbar benachbarten der Lamellenglieder über eine als Rastverbindung ausgebildete Gelenkverbindung realisiert, insbesondere in der Art einer Klipsverbindung, zu deren Herstellung jeweils benachbarte Lamellenglieder miteinander verklipst bzw. verrastet werden, derart, dass diese relativ zueinander, insbesondere um einen begrenzten Verschwenkwinkel verschwenkbar sind, der bevorzugt so gewählt ist, dass die Lamellenkette um mindestens 90° im Wege eines entsprechenden Führungsradius umlenkbar ist.

Eine konstruktiv einfache Ausbildung der Gelenkverbindung besteht darin, wenn diese mindestens zwei, bevorzugt jeweils als Durchgangsöffnung ausgebildete Aufnahmen und zwei verdrehbar bzw. verschwenkbar in den Aufnahmen aufgenommene Gelenkbolzen bzw. Fortsätze umfasst, wobei die Gelenkbolzen senkrecht zur Hochachse orientiert sind, um somit ein Verschwenken benachbarter Lamellenglieder senkrecht zur Hochachse (um die von den Gelenkbolzen definierte Schwenkachse) zu ermöglichen. Durch das Einrasten der Bolzen in die jeweils zugehörige Aufnahme ergibt sich gleichzeitig die zuvor beschriebene Verrastbarkeit, jeweils zweier benachbarter Lamellenglieder.

Unabhängig von der konkreten Ausgestaltung der Gelenkverbindung zwischen zwei benachbarten Lamellengliedern ist bevorzugt, wenn entsprechende Gelenkmittel einteilig mit den Lamellengliedern ausgebildet sind, dass also bis auf zwei benachbarte Lamellenglieder zur Herstellung der Gelenkverbindung zwischen diesen keine weiteren Verbindungs- oder Gelenkbauteile benötigt werden.

Insbesondere aus optischen Gründen ist erfindungsgemäß vorgesehen, die vorgenannten Gelenkverbindungen, insbesondere Rastverbindungen, von außen nicht sichtbar anzuordnen, d.h. an den in Richtung Gehäuseinneres gerichteten Rückseiten der Lamellenglieder. Dies hat jedoch nicht nur optische Vorteile, sondern verhindert auch eine mögliche Verschmutzung derselben durch Getränkespritzer bzw. Reste im Außenbereich.

Besonders zweckmäßig ist es, wenn zur Realisierung einer einteiligen Ausbildung der Gelenkverbindungsmittel mit den Lamellengliedern die Lamellenglieder jeweils mindestens zwei Rastpartnerpaare aufweisen, die sich bevorzugt in einander entgegengesetzte Richtungen entlang der Hochachse erstrecken. Jedes der Rastpartnerpaare dient dann zur Wechselwirkung bzw. Verbindung mit einem Rastpartnerpaar eines benachbarten Lamellengliedes. Bevorzugt umfasst eines der beiden Rastpartnerpaare beide zuvor beschriebenen Aufnahmen und das andere der Rastpartnerpaare eines jeweiligen Lamellengliedes zwei der zuvor beschriebenen Gelenkbolzen - denkbar ist es alternativ auch, dass jedes Rastpartnerpaar eine Aufnahme und einen Gelenkbolzen umfasst, die jeweils mit einem Gelenkbolzen bzw. einer Aufnahme eines Rastpartnerpaares eines benachbarten Lamellengliedes zur Realisierung einer Rast- bzw. Gelenkklipsverbindung zusammenwirken.

Bevorzugt befinden sich die Gelenkverbindungsmittel der Lamellenglieder an einem zumindest näherungsweise rechteckig konturierten Lamellenabschnitt des jeweiligen Lamellengliedes, bevorzugt rückseitig an diesem, wobei der Lamellenabschnitt im Wesentlichen die eigentliche Abdeckaufgabe hat und bevorzugt den Durchbruch seitlich bzw. randseitig in Richtung der Breitenerstreckung des Durchbruchs überlappt. Die Gelenkverbindungsmittel bzw. Rastverbindungsmittel befinden sich bevorzugt rückseitig an dem eigentlichen Lamellenabschnitt, auf einer von der Vorderseite der Getränkezubereitungsvorrichtung abgewandten Seite. Bevorzugt nimmt zur Realisierung der Rastverbindung ein Rastpartnerpaar einer Lamelle das Rastpartnerpaar der benachbarten Lamelle zwischen sich auf, wobei zumindest einer der Rastpartner der Rastpartnerpaare senkrecht zur Hochachse H, insbesondere in Richtung der Durchbruchbreitenerstreckung, elastisch verbiegbar sein sollte, um somit ein Einklipsen eines der Rastpartnerpaare zwischen das benachbarte Rastpartnerpaar der benachbarten Lasche zu ermöglichen.

Als besonders vorteilhaft hat es sich erwiesen, wenn die Lamellenglieder auf einer Gehäusefrontwandinnenseite angeordnet sind, also den Durchbruch von der Gehäuseinnenseite her abdecken.

Wie eingangs erwähnt, ist es grundsätzlich auch möglich, dass die Lamellenglieder zumindest abschnittweise in dem Durchbruch oder auf der Gehäusefrontwandseite bzw. auf der Gehäuseaußenseite angeordnet sind.

Eine nahezu hermetische bzw. staubdichte Abdeckung des Durchbruchs kann dadurch erreicht werden, wenn jeweils zwei entlang der Hochachse nebeneinander angeordnete Lamellenglieder sich senkrecht zur Erstreckung der Hochachse, überlappend angeordnet und ausgebildet sind, um sicher eine Spaltbildung zwischen zwei benachbarten Lamellengliedern im Bereich des Durchbruchs zu vermeiden. Bevorzugt ist vorstehend erläuterte Überlappung über die Breitenerstreckung des Durchbruchs durchgehend. Alternativ zu einer durchgehenden Überlappung ist es möglich, dass jeweils die benachbarten Lamellenglieder aneinander angrenzen, insbesondere aufeinander aufliegen, bevorzugt blickdicht, d.h. näherungsweise spaltfrei.

Im Hinblick auf eine kostengünstige Ausbildung der Lamellenglieder und im Hinblick auf eine möglichst einfache Realisierung der zuvor beschriebenen, bevorzugten Rastverbindungen zwischen zwei benachbarten Lamellengliedern, welche eine gewisse Elastizität der Gelenkverbindung, insbesondere in Richtung der Durchbruchsbreitenerstreckung erfordert, ist es von Vorteil, die, insbesondere identischen Lamellenglieder aus Kunststoff auszubilden, insbesondere jeweils als Kunststoffspritzgussteil.

Im Hinblick auf die Realisierung der Umlenkmittel zum Umlenken der Lamellenkette aus der Hochachse heraus, insbesondere in das Gehäuseinnere hinein, hat es sich als vorteilhaft herausgestellt, die Lamellenglieder bzw. die daraus gebildete Lamellenkette randseitig zu führen, insbesondere an zwei einander gegenüberliegenden, seitlich offenen Führungsnuten, wobei die Führungsnuten, bevorzugt zumindest abschnittsweise, gekrümmt ausgebildet sind, insbesondere über einen Winkel von 90°, um in dem sich ergebenden Radius, den gewünschten Richtungswechsel der Lamellenkette zu vollziehen.

Von besonderem Vorteil ist eine Ausführungsform, bei der die, bevorzugt U-förmigen Führungsnuten, jeweils mehrteilig ausgebildet sind, um auf diese Weise eine erleichterte Montage bzw. ein erleichtertes Einlegen der Lamellenkette zu ermöglichen. Bevorzugt ist hierzu ein Schenkel der Führungslamellen an einem weiteren, gegenüberliegenden, bevorzugt parallelen Schenkel fixierbar, insbesondere lösbar fixierbar, um insbesondere auch Reparaturen einfach durchführen zu können.

Alternativ oder bevorzugt zusätzlich zu der vorgenannten seitlichen Führung umfassen die Umlenkmittel weiterbildungsgemäß eine ortsfest, insbesondere im Inneren des Gehäuses, in einem Umlenkbereich für die Lamellenkette angeordnete Umlenkrolle, die reibschlüssig mit den Lamellengliedern verbunden ist, damit diese bei einem Hinwegbewegen der Lamellenglieder über die Umlenkrolle rotiert wird.

Bevorzugt ist für die Umlenkrolle rückseitig auf den Lamellen eine Art Führungskanal bzw. Führungsnut gebildet, insbesondere im Bereich der jeweiligen Lamellenmitte. Noch weiter bevorzugt ist die Führungsbahn bzw. Führungsnut gebildet von rückseitigen Stützstrukturen der Lamellenglieder zum Tragen der Gelenkverbindungsmittel (Rastverbindungsmittel). Dabei sind dann bevorzugt die rückseitigen Stützstrukturen der Lamellenglieder in Richtung der Längserstreckung der Führungsbahn bzw. Führungsnut beabstandet, so dass die Führungsbahn bzw. Führungsnut in einem Bereich zwischen den beabstandeten Stützstrukturen seitlich offen ist.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine Getränkezubereitungsvorrichtung in einer Frontansicht mit einem Durchbruch in einer Gehäusefrontwand,
- Fig. 2: dem Durchbruch gemäß Fig. 1 in einer Ansicht von innen,
- Fig. 3: eine Frontansicht des Durchbruchs, abgedeckt von einer mehrgliedrigen Lamellenkette,
- Fig. 4: die Gehäusefrontwand gemäß Fig. 3 mit Lamellenkette in einer Ansicht von hinten bzw. innen,
- Fig. 5: in einer vergrößerten Darstellung den Aufbau einer aus einer Vielzahl von identischen Lamellengliedern bestehenden Lamellenkette, wie diese in den Figuren 3 und 4 gezeigt ist,
- Fig. 6: eine Detailansicht von möglichen Umlenkmitteln für die Lamellenkette im Inneren des Getränkezubereitungsvorrichtungsgehäuses.

In den Figuren sind gleiche Elemente und Elemente mit der gleichen Funktion mit den gleichen Bezugzeichen gekennzeichnet.

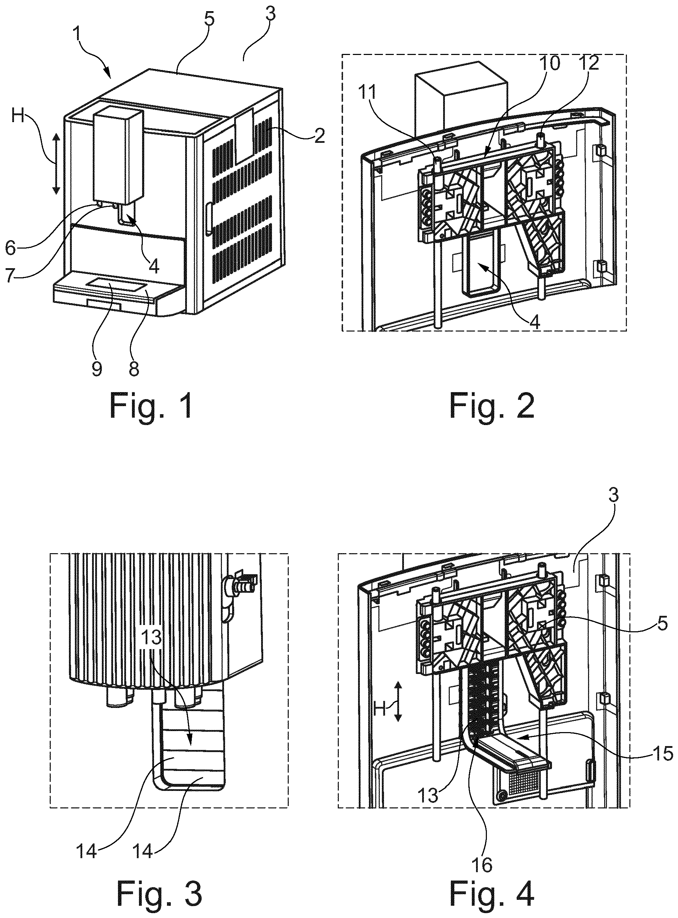

In Fig. 1 ist eine als Kaffeevollautomat (mit Mahlwerk und Brüheinheit) ausgebildete Getränkezubereitungsvorrichtung 1 gezeigt. Diese umfasst ein, hier beispielhaft im Wesentlichen quaderförmiges Gehäuse 2 mit einer Gehäusefrontwand 3. In der Gehäusefrontwand 3 ist ein Durchbruch 4 vorgesehen, der eine axiale bzw. translatorische Verstellbarkeit einer Getränkeauslaufeinheit 5 entlang einer Hochachse H ermöglicht, wobei die Getränkeauslaufeinheit 5 zwei Ausläufe 6, 7 für das Getränk, im vorliegenden Fall für Kaffe, aufweist. Die Ausläufe 6, 7 befinden sich oberhalb einer Tropfschale 8, deren Abdeckung 9 gleichzeitig eine Abstellfläche für zu füllende Behältnisse, hier Tassen bzw. Gläser, bildet. Durch die Höhenverstellbarkeit der Getränkeauslaufeinheit 5 können die Ausläufe 6, 7 relativ zu der Getränkebehälteröffnung verstellt werden.

Wie sich aus Fig. 2 ergibt, erstreckt sich die Getränkeauslaufeinheit 5 durch den Durchbruch 4 hindurch und ist mit einem innerhalb des Gehäuses angeordneten Führungsabschnitt 10 geführt, hier beispielhaft an zwei sich in Richtung der Hochachse H erstreckenden Führungsstangen 11, 12. Eine Getränkezuleitung, über die die Auslässe 6, 7 mit Kaffe versorgt werden können, und die innerhalb der Getränkeauslaufeinheit 5 durch den Durchbruch 4 hindurchgeführt ist, ist nicht gezeigt. Zu erkennen ist in Fig. 2 insbesondere der Durchbruch 4 in einer Ansicht von innen bzw. vom Gehäuseinneren her.

In Fig. 3 ist nun zu erkennen, dass der Durchbruch 4 auf der Innenseite des Gehäuses von einer mehrgliedrigen Lamellenkette 13 abgedeckt ist. Die Lamellenkette 13 umfasst eine Mehrzahl von identisch ausgebildeten Lamellenglieder 14 (Lamellen), wobei jeweils zwei unmittelbar benachbarte Lamellenglieder 14 gelenkig miteinander verbunden sind, wie später noch erläutert werden wird, über eine als Klipsmechanismus ausgebildete Gelenkverbindung.

Die Lamellenkette 13 ist an der Auslaufeinheit 5 im Inneren des Gehäuses festgelegt und dadurch zusammen mit der Gehäuseauslaufeinheit 5 verstellbar, abschnittsweise entlang der Hochachse H, wobei in einem unteren Umlenkbereich 15 Umlenkmittel 16 vorgesehen sind, die, wie später noch erläutert wird, eine Umlenkung in eine winklig zur Hochachse H verlaufende Richtung in das Gehäuseinnere bzw. von der Gehäusefrontwand 3 weg ermöglichen.

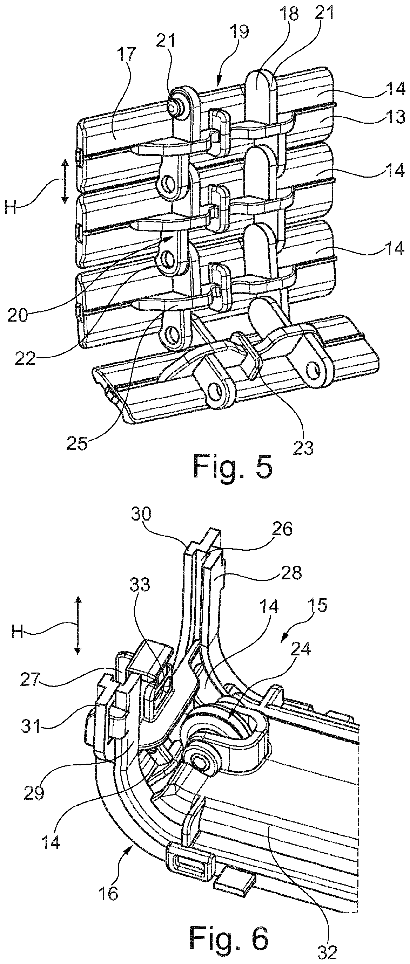

Im Folgenden wird anhand der Figuren 5 und 6 ein möglicher bzw. bevorzugter Aufbau der Lamellenkette 13 sowie der Umlenkmittel 16 erläutert.

Zunächst ist in Fig. 5 ein Ausschnitt der Lamellenkette 13 gezeigt. Die Lamellenkette 13 umfasst eine Mehrzahl von Lamellengliedern 14. Diese umfassen jeweils einen, im Wesentlichen rechteckig konturierten Lamellenabschnitt 17, dem in erster Linie die eigentliche Abdeckaufgabe zukommt und welcher den Durchbruch an beiden Längsseiten bzw. Rändern überlappt.

Ferner umfassen die Lamellenglieder 14 einteilig mit dem jeweiligen Lamellenabschnitt 17 ausgebildete Gelenkverbindungsmittel 18 zur Herstellung einer Gelenk-, Rast- bzw. Klipsverbindung.

Die Gelenkverbindungsmittel 18 umfassen an jedem Lamellenglied 14 zwei in einander unterschiedliche Richtungen entlang der Hochachse H orientierte Rastpartnerpaare 19, 20. Das in dem Ausführungsbeispiel nach oben orientierte Rastpartnerpaar 19 umfasst wiederum zwei senkrecht zur Hochachse H orientierte Rastbolzen 21, während das nach unten orientierte Rastpartnerpaar 20 zwei jeweils als Durchbruch ausgebildete Aussparungen 22 für die Rastbolzen des jeweils benachbarten Lamellengliedes 14 aufweist. Dazu wird ein Rastpartnerpaar 19 eines benachbarten Lamellengliedes 14 rastend zwischen den Rastpartnern eines Rastpartnerpaares 20 der anderen Lamelle aufgenommen.

Die Rastbolzen definieren eine Schwenk- bzw. Gelenkachse, um die die Lamellen/Lamellenglieder 14 in den Umlenkbereich 15 relativ zueinander verschwenkbar sind.

In Fig. 5 ist weiter zu erkennen, dass rückseitig an den Lamellen eine Führungsbahn 23 für eine später noch zu erläuternde Umlenkrolle 24 (vgl. Fig. 6) ausgebildet ist, wobei die Führungsbahn von beabstandeten Stützstrukturelementen 25 gebildet ist, die einteilig mit den jeweiligen Lamellengliedern 14 ausgebildet sind und die die vorerwähnten Rastpartnerpaare 19 bzw. 20 tragen bzw. stützen.

In Fig. 6 ist ein (unterer) Umlenkbereich 15 gezeigt, in welchem die Lamellenkette 13 mittels eines Radiuses bzw. Bogenabschnittes um 90° nach innen relativ zur Hochachse H umgelenkt wird. Zum Umlenken sind Umlenkmittel 16 vorgesehen, umfassend zwei parallele und voneinander beabstandete, im Wesentlichen U-förmig konturierte Führungsnuten 26, 27, die jeweils einen Randabschnitt der Lamellen 14 aufnehmen. Zu erkennen ist, dass die Führungsnuten 26, 27 mehrteilig ausgebildet sind und ein jeweils innerer Schenkel 28, 29 lösbar über einen Fixiermechanismus an einem zugehörigen, parallelen äußeren Schenkel 30, 31 festgelegt ist.

Die beiden inneren Schenkel 28, 29 sind Bestandteil eines inneren Abdeckelementes 32 an dem die vorerwähnte Rolle, die ebenfalls Bestandteil der Umlenkmittel 16 ist, rotierbar gelagert ist. Insofern kann die Umlenkrolle 24 gemeinsam mit den inneren Schenkeln 28, 29 montiert und demontiert werden, um die Lamellenkette 13 verschieblich zu fixieren bzw. wieder zu lösen.

In Fig. 6 ist zu erkennen, dass die Lamellenkette 13 an einem Adapterteil 33 festgelegt ist, welches ebenfalls in den Führungsnuten 26, 27 geführt ist und die nicht dargestellte Verbindung zu der ebenfalls nicht dargestellten Getränkeauslaufeinheit 5 bildet.

### Bezugszeichenliste

1 Getränkezubereitungsvorrichtung
2 Gehäuse
3 Gehäusefrontwand
4 Durchbruch
5 Getränkeauslaufeinheit
6 Auslauf
7 Auslauf
8 Tropfschale
9 Abdeckung
10 Führungsabschnitt
11 Führungsrohr
12 Führungsrohr
13 Lamellenkette
14 Lamellenglieder
15 Umlenkbereich
16 Umlenkmittel
17 Lamellenabschnitt
18 Gelenkverbindungsmittel
19 Rastpartnerpaar
20 Rastpartnerpaar
21 Rastbolzen
22 Aussparungen
23 Führungsbahn
24 Umlenkrolle
25 Stützstrukturabschnitt
26 Führungsnut
27 Führungsnut
28 innerer Schenkel
29 innerer Schenkel
30 äußerer Schenkel
31 äußerer Schenkel
32 Abdeckelement
33 Adapterteil

## Patentansprüche

1. Getränkezubereitungsvorrichtung, insbesondere Kaffeemaschine, mit einem Gehäuse (2) und mit einer vor einer Gehäusefrontwand (3) angeordneten, entlang einer Hochachse (H) höhenverstellbaren Getränkeauslaufeinheit (5), wobei in der Gehäusefrontwand (3) ein sich entlang der Hochachse (H) erstreckender Durchbruch (4) angeordnet ist, durch welchen sich mindestens eine Getränkezulaufleitung erstreckt, mit welcher die Getränkeauslaufeinheit (5) mit Getränkezubereitungsmitteln fluidleitend verbunden ist und wobei mit der Getränkeauslaufeinheit (5) Abdeckmittel derart verbunden sind, dass diese durch manuelles oder automatisches Verstellen der Getränkeauslaufeinheit (5) zusammen mit dieser verschiebbar sind und die einen von der Getränkeauslaufeinheit (5) nicht abgedeckten Abschnitt des Durchbruchs (4) abdecken und wobei den Abdeckmitteln Umlenkmittel (16) zugeordnet sind, mit denen die Abdeckmittel relativ zur Hochachse (H) im Inneren des Gehäuses (2) umlenkbar sind,
**dadurch gekennzeichnet,**
**dass** die Abdeckmittel mindestens eine mehrgliedrige Lamellenkette (13) umfassen, die eine Mehrzahl von gelenkig miteinander verbundenen, bevorzugt identischen Lamellengliedern (14) umfassen, und dass jeweils zwei unmittelbar benachbarte Lamellenglieder (14) über eine Gelenkverbindung gelenkig miteinander verrastet sind, und dass die Gelenkverbindungen zur gelenkigen Verbindung von benachbarten der Lamellenglieder (14) im Bereich des Durchbruchs (4) auf einer in Richtung Gehäuseinnenseite gerichteten Seite der Lamellenglieder (14) angeordnet und somit von außerhalb des Gehäuses (2) nicht sichtbar sind.

2. Getränkezubereitungsvorrichtung nach Anspruch 1,
**dadurch gekennzeichnet,**
**dass** die jeweilige Gelenkverbindung zwei, bevorzugt jeweils als Durchgangsöffnung ausgebildete Aufnahmen und zwei verdrehbar in den Aufnahmen aufgenommene Gelenkbolzen umfassen, die senkrecht zur Hochachse (H) orientiert sind.

3. Getränkezubereitungsvorrichtung nach einem der Ansprüche 1 oder 2,
**dadurch gekennzeichnet,**
**dass** die Lamellenglieder (14) jeweils zwei Rastpartnerpaare (19, 20) aufweisen, die mit jeweils einem Rastpartnerpaar (19, 20) des jeweils benachbarten Lamellengliedes (14) gelenkig verrastet sind.

4. Getränkezubereitungsvorrichtung nach einem der vorhergehenden Ansprüche,
**dadurch gekennzeichnet,**
**dass** die Lamellenglieder (14) auf einer Gehäusefrontwandinnenseite angeordnet sind.

5. Getränkezubereitungsvorrichtung nach einem der vorhergehenden Ansprüche,
**dadurch gekennzeichnet,**
**dass** sich jeweils zwei miteinander gelenkig verbundene Lamellenglieder (14) im Bereich des Durchbruchs (4) über die gesamte sich senkrecht zur Hochachse (H) erstreckende Durchbruchsbreite überlappen oder blickdicht, insbesondere spaltfrei, aneinander liegen.

6. Getränkezubereitungsvorrichtung nach einem der vorhergehenden Ansprüche,
**dadurch gekennzeichnet,**
**dass** die Lamellenglieder (14) aus Kunststoff, insbesondere als Kunststoffspritzgussteile ausgebildet sind.

7. Getränkezubereitungsvorrichtung nach einem der vorhergehenden Ansprüche,
**dadurch gekennzeichnet,**
**dass** die Umlenkmittel (16) zwei einander gegenüberliegende abschnittsweise in einem Radius gekrümmte Führungsnuten zur Führung der Lamellenglieder (14) in einem Randbereich umfassen, in denen die Lamellenglieder verschieblich angeordnet sind.

8. Getränkezubereitungsvorrichtung nach einem der vorhergehenden Ansprüche,
**dadurch gekennzeichnet,**
**dass** die Umlenkmittel (16) eine ortfest, insbesondere im Inneren des Gehäuses (2), in einem Umlenkbereich (15) angeordnete Umlenkrolle (24) umfassen, die reibschlüssig mit den Lamellengliedern (14) verbunden ist und bei einem Hinwegbewegen der Lammellenglieder (14) über die Umlenkrolle (24) rotierbar ist.

9. Getränkezubereitungsvorrichtung nach einem der vorhergehenden Ansprüche,
**dadurch gekennzeichnet,**
**dass** der von der mindestens Lamellenkette (13) abgedeckte Abschnitt des Durchbruchs (4) unterhalb und/oder oberhalb der Getränkeauslaufeinheit (5) angeordnet ist.

## Claims

1. A beverage preparation device, in particular a coffee machine, having a housing (2) and a beverage outlet unit (5) which is disposed in front of a housing front wall (3) and which is height-adjustable along a vertical axis (H), wherein an opening (4) extending along the vertical axis (H) is disposed in the housing front wall (3), at least one beverage supply line by means of which the beverage outlet unit (5) is connected to beverage preparation means in a fluid-conducting manner extending through said opening (4), and wherein cover means are connected to the beverage outlet unit (5) in such a way that they are moveable together with the beverage outlet unit (5) by manually or automatically adjusting said beverage outlet unit (5) and that said cover means cover a section of the opening (4) which is not covered by the beverage outlet unit (5), and wherein the cover means are assigned deflection means (16) by means of which the cover means are deflectable relative to the vertical axis (H) on the inside of the housing (2),
**characterized in that**
the cover means comprise at least one multi-link slat chain (13) which comprises a plurality of articulated, preferably identical slat links (14), and that, in each case, two slat links (14) directly adjacent to each other are interlocked in an articulated manner via an articulation and that the articulations for the articulated connection of adjacent ones of the slat links (14) are disposed in the area of the opening (4) on a side of the slat links (14) which is directed towards the housing inner side and that said articulations are therefore not visible from outside of the housing (2).

2. The beverage preparation device according to claim 1,
**characterized in that**
the respective articulation comprises two seats, each preferably realized as a passage opening, and two articulated bolts rotatably accommodated in the seats and oriented perpendicular to the vertical axis (H).

3. The beverage preparation device according to any one of the claims 1 or 2,
**characterized in that**
the slat links (14) each have two locking partner pairs (19, 20) which are each interlocked in an articulated manner with a locking partner pair (19, 20) of the adjacent slat link (14).

4. The beverage preparation device according to any one of the preceding claims,
**characterized in that**
the slat links (14) are disposed on a housing front wall inner side.

5. The beverage preparation device according to any one of the preceding claims,
**characterized in that**
in each case, two slat links (14) connected in an articulated manner overlap or adjoin each other over the entire opening width, which extends perpendicular to the vertical axis (H), in an opaque manner, in particular without a gap, in the area of the opening (4).

6. The beverage preparation device according to any one of the preceding claims,
**characterized in that**
the slat links (14) are made of plastic, in particular realized as injection-molded plastic parts.

7. The beverage preparation device according to any one of the preceding claims,
**characterized in that**
the deflection means (16) comprise two opposite guiding grooves which have a portion curved in a radius and which serve to guide the slat links (14) in an edge portion, the slat links (14) being slideably disposed in said guiding grooves.

8. The beverage preparation device according to any one of the preceding claims,
**characterized in that**
the deflection means (16) comprise a stationary deflection roll (24) which is disposed in a deflection area (15), in particular on the inside of the housing (2), and which is frictionally connected to the slat links (14) and which can rotate when the slat links (14) move across the deflection roll (24).

9. The beverage preparation device according to any one of the preceding claims,
**characterized in that**
the section of the opening (4) covered by the at least one slat chain (13) is disposed below and/or above the beverage outlet unit (5).

## Revendications

1. Dispositif de préparation de boissons, notamment une cafetière, ayant un boîtier (2) et ayant une unité de sortie de boissons (5) qui est disposée devant une paroi avant de boîtier (3) et qui est réglable en hauteur le long d'un axe vertical (H), une ouverture (4) qui s'étend le long de l'axe vertical (H) étant disposée dans la paroi avant de boîtier (3), au moins une conduite d'alimentation de boissons s'étendant à travers l'ouverture (4), l'unité de sortie de boissons (5) étant connectée en communication fluidique à des moyens de préparation de boissons par l'intermédiaire de la conduite d'alimentation de boissons, et des moyens de couverture étant connectés à l'unité de sortie de boissons (5) de telle sorte qu'ils sont mobiles conjointement avec l'unité de sortie de boissons (5) par l'ajustage manuel ou automatique de ladite unité de sortie de boissons (5) et que lesdits moyens de couverture couvrent une partie de l'ouverture (4) qui n'est pas couverte par l'unité de sortie de boissons (5), et des moyens de déviation, au moyen desquels les moyens de couverture peuvent être déviés par rapport à l'axe vertical (H) dans l'intérieur du boîtier (2), étant assignés aux moyens de couverture,
**caractérisé en ce que**
les moyens de couverture comprennent au moins une chaîne à lamelles (13) à maillons multiples qui comprend une pluralité de maillons lamellaires (14), de préférence identiques, reliés les uns aux autres de manière articulée, et **en ce que** toujours deux maillons lamellaires (14) directement adjacents sont verrouillés l'un à l'autre de manière articulée par un assemblage articulé, et **en ce que** les assemblages articulés pour la connexion articulée des maillons lamellaires (14) adjacents sont disposés dans la région de l'ouverture (4) sur un côté des maillons lamellaires (14) dirigé vers l'intérieur du boîtier et **en ce que** lesdits assemblages articulés, par conséquent, ne sont pas visibles depuis l'extérieur du boîtier (2).

2. Dispositif de préparation de boissons selon la revendication 1,
**caractérisé en ce que**
l'assemblage articulé respectif comprend deux récipients, de préférence formés chacun comme ouverture de passage, et deux axes d'articulation qui sont reçus de manière rotative dans les récipients et qui sont orientés perpendiculairement par rapport à l'axe vertical (H).

3. Dispositif de préparation de boissons selon la revendication 1 ou 2,
**caractérisé en ce que**
chaque maillon lamellaire (14) a deux paires de partenaires de verrouillage (19, 20) qui sont verrouillées chacun de manière articulée avec une paire de partenaires de verrouillage (19, 20) du maillon lamellaire (14) respectivement adjacent.

4. Dispositif de préparation de boissons selon l'une quelconque des revendications précédentes,
**caractérisé en ce que**
les maillons lamellaires (14) sont disposés sur un côté intérieur de la paroi avant de boîtier.

5. Dispositif de préparation de boissons selon l'une quelconque des revendications précédentes,
**caractérisé en ce que**
toujours deux maillons lamellaires (14) qui sont reliés l'un à l'autre de manière articulée se chevauchent dans la région de l'ouverture (4) sur toute la largeur d'ouverture qui s'étend perpendiculairement par rapport à l'axe vertical (H) ou sont adjacents l'un à l'autre de manière opaque, notamment sans fente.

6. Dispositif de préparation de boissons selon l'une quelconque des revendications précédentes,
**caractérisé en ce que**
les maillons lamellaires (14) sont formés en matière plastique, notamment comme des pièces moulées par injection en matière plastique.

7. Dispositif de préparation de boissons selon l'une quelconque des revendications précédentes,
**caractérisé en ce que**
les moyens de déviation (16) comprennent deux rainures de guidage qui sont opposées l'une à l'autre et qui sont courbées en sections dans un rayon pour le guidage des maillons lamellaires (14) dans une zone marginale, les maillons lamellaires (14) étant disposés de manière mobile dans lesdites rainures de guidage.

8. Dispositif de préparation de boissons selon l'une quelconque des revendications précédentes,
**caractérisé en ce que**
les moyens de déviation (16) comprennent une poulie de déviation (24) disposée de manière fixe, notamment dans l'intérieur du boîtier (2), dans une zone de déviation (15), ladite poulie de déviation (24) étant reliée avec les maillons lamellaires (14) de manière entraînée par friction et pouvant tourner lorsque les maillons lamellaires (14) meuvent par-dessus la poulie de déviation (24).

9. Dispositif de préparation de boissons selon l'une quelconque des revendications précédentes,
**caractérisé en ce que**
la partie de l'ouverture (4) couverte par l'au moins une chaîne à lamelles (13) est disposée au-dessous et/ou au-dessus de l'unité de sortie de boissons (5).
